# EUROPEAN PATENT APPLICATION

(11) **EP 4 571 979 A1**
(43) Date of publication of application: **18.06.2025**
(21) Application number: 24845922.4
(22) Date of filing: 18.07.2024
(51) Int. Cl.: H01M 50/264, H01M 50/204, H01M 10/6556

(54) **BATTERY PACK**

(30) Priority: 21.07.2023 KR 20230094962
(71) Applicant: LG Energy Solution, Ltd., Seoul 07335 (KR)
(72) Inventor: JANG, Byung Do, Daejeon 34122 (KR)
(74) Representative: Plasseraud IP
(86) International application number: PCT/KR2024/010357
(87) International publication number: WO 2025/023620

(57) **Abstract**

A battery pack may include a cell unit including a plurality of battery cells, a base plate supporting a bottom surface of the cell unit, a cell unit fixative interposed between the cell unit and the base plate, and including a structural adhesive applied to a portion of the bottom surface of the cell unit and a non-curable filler applied to a remaining portion of the bottom surface of the cell unit, and a cell lower part panel interposed between the base plate and the cell unit fixative. The cell lower part panel may be removably fastened to the base plate to which the cell unit is adhered and fixed by the structural adhesive.

## Description

### [Technical Field]

This application claims the benefit of priority from Korean Patent Application No. 10-2023-0094962, filed on July 21, 2023, the disclosures of which are incorporated herein by reference.

The present disclosure relates to a battery pack, and more particularly to a battery pack suitable for extending the life of a battery pack with minimal maintenance by enabling replacement of some of the plurality of battery cells mounted in the battery pack when a problem arises, without the need to dispose of the entire battery pack.

### [Background]

Battery packs with cell-to-pack structure have been proposed to improve the space utilization rate of battery packs. The cell-to-pack structure has the advantage of improving the space utilization rate of the battery pack by assembling a plurality of battery cells directly into the battery pack without modularization.

As separate module housings are omitted or simplified in cell-to-pack structures, new structures are being proposed to efficiently mount a plurality of battery cells to a pack case. For example, a cell unit (corresponding to a battery module of the related art) in which a plurality of battery cells forms a group may be coupled with a side frame, and may be designed as a structure in which the side frame of the cell unit is fixed to the cross beam of the pack case.

Alternatively, the side frames of adjacent cell units may be overlapped top to bottom and fixed to the base plate to serve as pack cross beams (meaning cross beams provided in the pack case). Furthermore, a thermal resin may be interposed between the bottom surface of the cell unit where the battery cell is exposed and the base plate of the pack case to facilitate the conduction heat dissipation of the cell unit and to further fix the cell unit by curing the thermal resin.

However, the battery pack structure that utilizes the side frame of the cell unit to omit the configuration of the pack cross beam and further fixes the cell unit through the curing of the thermal resin has many advantages in terms of the cell-to-pack structure, such as improving the space utilization rate of the battery pack by assembling a plurality of battery cells directly into the battery pack without modularization, but it has disadvantages in terms of the maintenance of the battery pack. **In** other words, such a cell-to-pack structure makes it very difficult to disassemble the battery pack down to the cell unit level once assembled.

For example, a cell-to-pack structure in which the side frames of adjacent cell units are stacked and fixed to a base plate makes disassembly possible only by removing the cell units one by one in the reverse order of assembly. In addition, a structure in which the bottom surface of the cell units is fixed by curing the thermal resin can result in damage in the battery cells bonded to the thermal resin when the cell units are removed, which can lead to quite dangerous consequences such as electrolyte leakage.

There is a strong need to develop a battery pack with a cell-to-pack structure that can be easily disassembled down to the battery cell unit, so that if only one battery cell in the battery pack fails, the battery pack can be maintained by replacing that battery cell, thus avoiding the need to dispose of expensive battery packs and utilizing them for their designed lifetime.

### [Summary]

### [Technical Problem]

The present disclosure aims to provide a battery pack having a cell-to-pack structure, wherein any cell unit can be easily removed regardless of the order of assembly, thereby facilitating the replacement of a faulty battery cell.

However, the technical problems that the present disclosure seeks to address are not limited to the problems described above, and other problems not mentioned will be apparent to those of ordinary skill in the art from the description of the disclosure set forth below.

### [Technical Solution]

The present disclosure relates to a battery pack, which in one example may include a cell unit including a plurality of battery cells, a base plate supporting a bottom surface of the cell unit, a cell unit fixative interposed between the cell unit and the base plate, and including a structural adhesive applied to a portion of the bottom surface of the cell unit and a non-curable filler applied to a remaining portion of the bottom surface of the cell unit, and a cell lower part panel interposed between the base plate and the cell unit fixative, the cell lower part panel being removably fastened to the base plate to which the cell unit is adhered and fixed by the structural adhesive.

In one embodiment of the present disclosure, the portion of the bottom surface of the cell unit may correspond to the cell lower part panel.

In addition, the cell lower part panel may include a main body in which the structural adhesive is interposed, and a bolt extending from the main body, wherein the bolt may be fixed with a nut through a through-hole formed in the base plate.

An upper surface of the base plate may be provided with a concave surface comprising the through-hole, and the main body of the cell lower part panel may be accommodated within the concave surface.

In addition, an upper surface of the main body accommodated in the concave surface and the upper surface of the base plate may form a flat surface.

The bottom surface of the base plate may be provided with a recess for accommodating the nut so that the nut does not protrude outwardly, thereby allowing a tool to access the nut.

According to the embodiment of the present disclosure, a bottom surface of the base plate may be coupled to a cooling plate, and bolts and nuts may be located in areas where no flow paths are formed in the cooling plate.

In addition, the structural adhesive forms a curable adhesive layer, and the non-curable filler forms a non-curable adhesive layer.

In addition, the cell unit may be released from a fixing state with respect to the base plate as the nut fastening of the bolt is released, and may be withdrawn out of the battery pack together with the cell lower part panel bonded by the structural adhesive.

The cell unit fixative may have the non-curable filler disposed on either side of the structural adhesive.

### [Advantageous Effects]

In the battery pack of the present disclosure with the above configuration, the structural adhesive forming a semi-permanent adhesive surface firmly fixes the base plate and the cell unit via the cell lower part panel, but by ensuring the detachable state between the cell lower part panel and the base plate, the structural adhesive does not hinder the removal of the cell unit. As a result, the cell unit in the battery pack of the present disclosure can be easily removed by the cell lower part panel, even though the cell unit is firmly fixed with respect to the base plate by a solid curable adhesive layer formed by the structural adhesive on a portion of the bottom surface of the cell unit.

Furthermore, in the battery pack of the present disclosure, the side frames of the cell units are bolted to the upper surface of the cross beam to fix the cell units in a lateral direction, wherein the side frames of adjacent cell units do not overlap each other on the cross beam. Accordingly, when removing the faulty cell unit, it is not necessary to remove other neighboring cell units first, thereby simplifying removal of the cell unit.

However, the technical effects of the present disclosure are not limited to those described above, and other effects not mentioned will be apparent to those of ordinary skill in the art from the description of the invention set forth below.

### [Brief Description of the Drawings]

The following drawings accompanying this specification illustrate embodiments of the present disclosure and are intended to serve as a further understanding of the technical ideas of the present disclosure in conjunction with the detailed description of the disclosure that follows, so the present disclosure is not to be construed as limited to what is shown in such drawings.
FIG. 1 is a drawing illustrating a fixing structure of a cell unit in a battery pack according to the present disclosure.
FIG. 2 is a cross-sectional view cut along the "A-A" line in FIG. 1.
FIG. 3 is a drawing illustrating the removal of the cell unit of FIG. 2 from the battery pack.
FIG. 4 is a drawing illustrating the cell lower part panel.
FIG. 5 is a drawing illustrating the bottom surface of the battery pack.
FIG. 6 is a drawing illustrating an embodiment in which a battery pack is provided with a cooling plate.
FIGS. 7 and 8 are drawings illustrating the assembly process of a battery pack according to the present disclosure.

### [Best Mode for Carrying out the Invention]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper part but also a case of being disposed on a lower part.

The present disclosure relates to a battery pack, which in one example includes: a cell unit comprising a plurality of battery cells; a base plate supporting the bottom surface of the cell unit; a cell unit fixative interposed between the cell unit and the base plate, comprising a structural adhesive applied to or in contact with a portion of the bottom surface of the cell unit and a non-curable filler applied to or in contact with a remaining portion of the bottom surface of the cell unit; and a cell lower part panel interposed between the base plate and the cell unit fixative, removably fastened to the base plate, adhered and fixed to the cell unit by the structural adhesive.

The structural adhesive forms a curable adhesive layer, and the non-curable filler forms a non-curable adhesive layer, whereby the cell lower part panel not fixed to the base plate, can be withdrawn out of the pack together with the cell units mutually coupled by the structural adhesive.

The battery pack of the present disclosure with the above configuration, wherein the adhesion for fixing the cell unit to the base plate is provided by both a structural adhesive and a non-curable filler, wherein the curable structural adhesive is locally adhered to the bottom surface of the cell unit, but the structural adhesive is interposed in a cell lower part panel that is removable from the base plate, such that the cell unit and the cell lower part panel interposed with the structural adhesive can be withdrawn together out of the pack.

That is, by limiting the area where the curable structural adhesive is interposed to the cell lower part panel, it is easier to separate the faulty cell unit from the battery pack and replace only the faulty cell unit, allowing the entire battery pack to be reused rather than being discarded.

### [Mode for Carrying Out the Invention]

Hereinafter, with reference to the accompanying drawings, a specific embodiment of a battery pack 10 according to the present disclosure will be described in detail. For reference, the directions of front to back, up and down, and left and right used in the following description to designate relative positions are intended to aid in the understanding of the invention and refer to the directions shown in the drawings unless otherwise defined.

### [First embodiment]

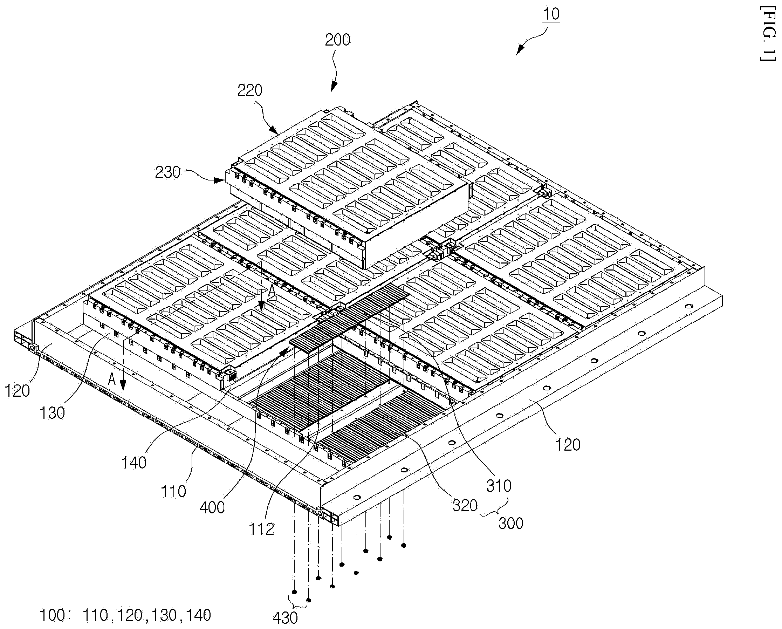

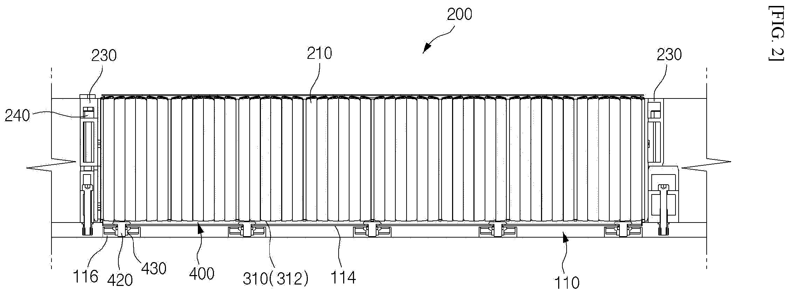

FIG. 1 is a drawing illustrating a fixed structure of a cell unit 200 in a battery pack 10 according to the present disclosure, and FIG. 2 is a cross-sectional view cut along the line "A-A" in FIG. 1.

The present disclosure relates to a battery pack 10, including a pack case 100 and a plurality of cell units 200 mounted in the pack case 100. As used herein, the cell unit 200 refers to a group formed by a plurality of battery cells 210, and includes structures for making the plurality of battery cells 210 into a unit. For example, the cell unit 200 may be provided with a busbar frame assembly 220 that mechanically and electrically couples the plurality of battery cells 210 at both transverse ends from which the leads of the battery cells 210 protrude, and a side frame 230 that protects the battery cells 210 on both longitudinal sides. Thus, in the cell unit 200, the plurality of battery cells 210 are aligned in a row along their thickness direction in an upright position. Further, the illustrated cell unit 200 is suitable for a battery pack 10 with a cell-to-pack structure, wherein the battery cells 210 are exposed on its bottom surface without any additional structure.

The pack case 100 includes a base plate 110, which is a bottom plate. The base plate 110 supports the bottom surface of the cell unit 200, i.e., the bottom surface of the plurality of battery cells 210, and serves to absorb heat in the form of heat conduction from the bottom surface of the cell unit 200 and dissipate it to the outside. To dissipate the absorbed heat to the outside via a coolant, the base plate 110 itself may have a heat sink built into it, or a separate cooling plate 150 may be bonded to its bottom surface.

The pack case 100 may further include side plates 120 coupled along a perimeter of the base plate 110 to form an accommodation space therein, and a cross beam 130 coupled to the base plate 110 to transversely compartmentalize the accommodation space inside the base plate 110. Depending on the embodiment, the pack case 100 may further include a center beam 140 that longitudinally compartmentalizes the accommodation space inside the base plate 110, such that the accommodation space of the pack case 100 is arranged in a grid by the cross beam 130 and the center beam 140, as shown in the attached FIG. 1.

The fixing structures for mounting the plurality of cell units 200 on the base plate 110 includes a cell unit fixative 300 interposed between the cell unit 200 and the base plate 110, the cell unit fixative 300 comprising two types, a structural adhesive 310 and a non-curable filler 320. While the structural adhesive 310 and the non-curable filler 320 have in common that they have high thermal conductivity for good heat dissipation, they have distinct differences in adhesion or hardenability.

The structural adhesive 310 is a cell unit fixative 300 that forms a curable adhesive layer 312 between the base plate 110 and the cell unit 200, for example, a curable thermal resin may be applied as the structural adhesive 310. The thermal resin has the properties of a viscous gel upon application, but cures to a hard solid after a period of time due to exposure to air. As a result of this curing of the thermal resin, the bottom surface of the cell unit 200 is securely fixed to the base plate 110.

On the other hand, the non-curable filler 320 is a cell unit fixative 300 that forms a non-curable adhesive layer 322 between the base plate 110 and the cell units 200, which does not harden over the life of the battery pack 10 or for an extended period of the service warranty, despite the passage of time and temperature fluctuations caused by repeated charge and discharge. The non-curable filler 320 acts as both an adhesive and a buffer, the adhesion of the non-curable filler 320 being much weaker than that of the structural adhesive 310. Thus, the non-curable filler 320 does not act as a hindrance in the process of separating the cell unit 200 from the base plate 110. As such a non-curable filler 320, for example, a gap filler with the trade name "TGF 3010 APS" from Henkel AG & Co. KGaA, Disseldorf, Germany, can be applied.

Further, the battery pack 10 of the present disclosure includes a cell lower part panel 400 that can ensure smooth separation of the cell unit 200 relative to the pack case 100. The cell lower part panel 400 is interposed between the base plate 110 and the cell unit fixative 300. More specifically, the cell lower part panel 400 is interposed between the base plate 110 and the structural adhesive 310. The cell lower part panel 400 is fastened so that it can be separated from the base plate 110, and the structural adhesive 310 is adhered to an upper surface of the cell lower part panel 400. Thus, the cell lower part panel 400 is adhered and fixed to the cell unit 200 by the structural adhesive 310. Meanwhile, the cell lower part panel 400 may be fixed to or detachable with respect to the base plate 110.

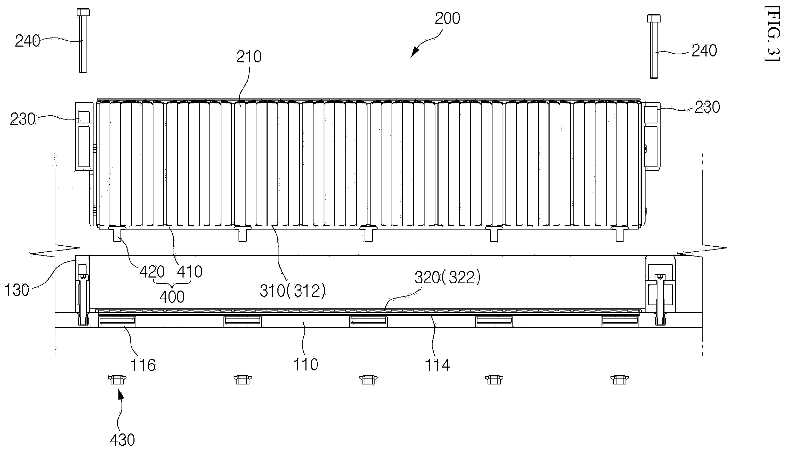

FIG. 3 is a diagram illustrating the cell unit 200 being removed from the battery pack 10. Prior to the cell unit 200 being stored within the pack case 100, the cell lower part panel 400 is coupled and fixed to the base plate 110. The cell unit 200 is adhered and fixed to the base plate 110 by a cell unit fixative 300, as shown in FIG. 2. Of the cell unit fixative 300, the cured structural adhesive 310 fixes the cell unit 200 in place on a semi-permanent basis, and the non-curable filler 320 adhered to the remaining area of the bottom surface of the cell unit 200 fixes the cell unit 200 with adhesion such that the adhesive surfaces can be separated when appropriate force is applied.

In such a fixed structure of the cell unit 200, as shown in FIG. 3, when the cell unit 200 is removed upward after releasing the cell lower part panel 400 from fastening state with respect to the base plate 110, the cell lower part panel 400 adhered to by the structural adhesive 310 remains attached to the cell unit 200, while the areas of the non-curable filler 320 with weak adhesion are detached from the adhesive surface. Accordingly, the cell unit 200 is withdrawn outside of the pack case 100 with the cell lower part panel 400 adhered to its bottom surface.

In other words, the structural adhesive 310, which forms a semi-permanent adhesive surface, firmly fixes the base plate 110 and the cell unit 200 via the cell lower part panel 400, but the curable adhesive layer 312 formed by the structural adhesive 310 does not impede the removal of the cell unit 200 because the cell lower part panel 400 is in a detachable state from the base plate 110. And, the non-curable adhesive layer 322 formed by the non-curable filler 320 does not hinder the removal of the cell unit 200 due to the appropriate traction force acting upon removal of the cell unit 200. As a result, the battery pack 10 of the present disclosure facilitates removal of the cell unit 200 by the cell lower part panel 400, even though the cell unit 200 is firmly fixed against the base plate 110 by a strong curable adhesive layer 312 formed by the structural adhesive 310 on a portion of the bottom surface of the cell unit 200.

For smooth removal of the cell unit 200, the structural adhesive 310 does not encroach on an area outside of the cell lower part panel 400. That is, the structural adhesive 310 does not form a curable adhesive layer 312 between the base plate 110 and the cell unit 200, without interposition of the cell lower part panel 400, which is advantageous for removal of the cell unit 200. Furthermore, the curable adhesive layer 312 and the non-curable adhesive layer 322 may be disposed in a balanced manner so that a uniform adhesive force is applied to the cell unit 200. To this end, the cell unit fixative 300 may be configured such that the non-curable filler 320 is disposed on either side of the centrally located structural adhesive 310.

For such cell unit fixative 300, the bottom surface of the cell unit 200 may contact the cell unit fixative 300 after it is applied to the base plate 110 and cell lower part panel 400, or it may be applied directly to the bottom surface of the cell unit 200. However, since the cell lower part panel 400 is the dividing line between the areas of curable adhesive layer 312 and non-curable adhesive layer 322, it may be advantageous from a process control perspective to apply the cell unit fixative 300 over the base plate 110 on which the cell lower part panel 400 is installed.

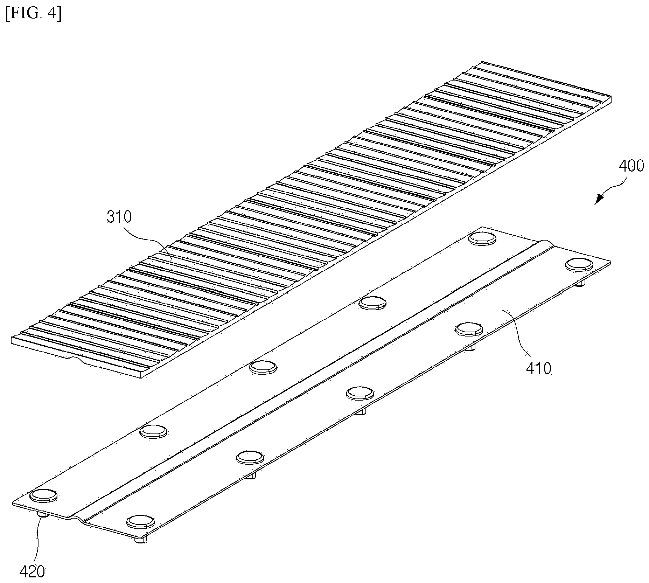

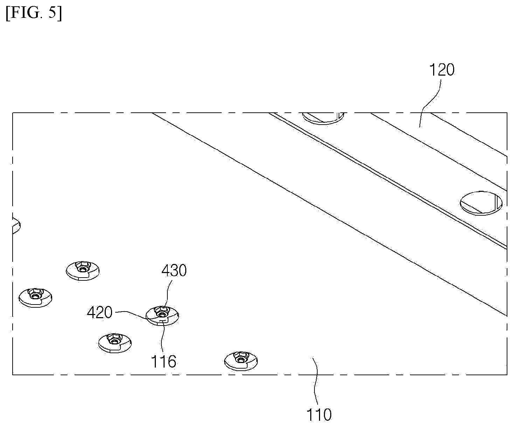

FIG. 4 is a drawing illustrating a cell lower part panel 400, and FIG. 5 is a drawing illustrating a bottom surface of a battery pack 10. In the embodiment shown, the cell lower part panel 400 includes a main body 410 in which the structural adhesive 310 is interposed, and bolts 420 extending from the main body 410. The bolt 420 extending downwardly of the cell lower part panel 400 passes through the through-hole 112 formed in the base plate 110 and is fixed with a nut 430. If the base plate 110 incorporates a heat sink, i.e., if a flow path through which coolant flows is formed inside the base plate 110, the through-holes 112 need to be formed at a location that avoids the flow path.

And, in order to form a uniform adhesive surface, the cell lower part panel 400 and the base plate 110 form a flat surface without protrusions. To this end, the upper surface of the base plate 110 is provided with a concave surface 114 including a through-hole 112, and the main body 410 of the cell lower part panel 400 is accommodated in the concave surface 114. The upper surface of the main body 410 accommodated in the concave surface 114 is aligned with the upper surface of the base plate 110, thereby realizing uniform surface contact with the bottom surface of the cell unit 200.

Additionally, as shown in FIG. 5, the bottom surface of the base plate 110 may be provided with a recess 116 that accommodates a nut 430 fastened to the bolts 420 of the cell lower part panel 400 so that the nut 430 does not protrude outwardly. By accommodating the nuts 430 in the recess 116, the bottom surface of the base plate 110 is flat to prevent interference with the installation of the battery pack 10, and also reduces the likelihood of the nuts 430 loosening or being damaged. Further, the size (diameter) of the recess 116 is formed to a size allowing for access by tools to facilitate the fastening and separation process of the cell lower part panel 400.

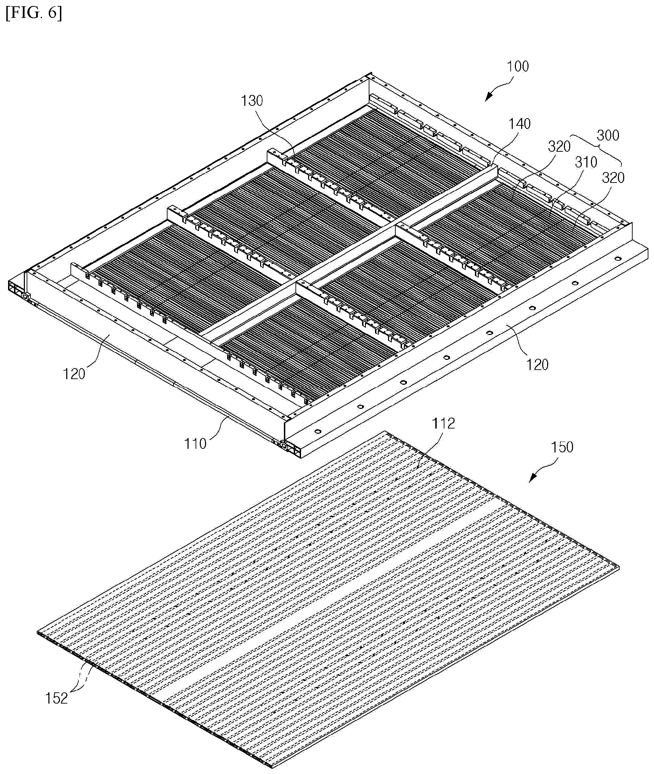

FIG. 6 is a drawing illustrating an embodiment in which the battery pack 10 of the present disclosure is provided with a cooling plate 150. Inside the cooling plate 150, a flow path 152 is formed through which a coolant flow. The low-temperature coolant introduced at the inlet flows along the flow path 152 and absorbs the heat generated by the cell unit 200 mounted on the base plate 110 in the form of conduction, and the coolant whose temperature has gradually increased by absorbing the heat is discharged through the outlet. As described above, the heat dissipation of the cell unit 200 is facilitated by a heat-conducting cell unit fixative 300 interposed between the cell unit 200 and the base plate 110 (including the cell lower part panel).

Since the cell lower part panel 400 is fastened through the base plate 110, when the cooling plate 150 is bonded to the bottom surface of the base plate 110, the bolts 420 of the cell lower part panel 400 should integrally penetrating the base plate 110 and the cooling plate 150 and be fastened with nuts 430. In this case, the bolts 420 and nuts 430 are located in areas of the cooling plate 150 where the flow paths 152 are not formed, so as to prevent the coolant from leaking out and not impede its flow.

### [Second embodiment]

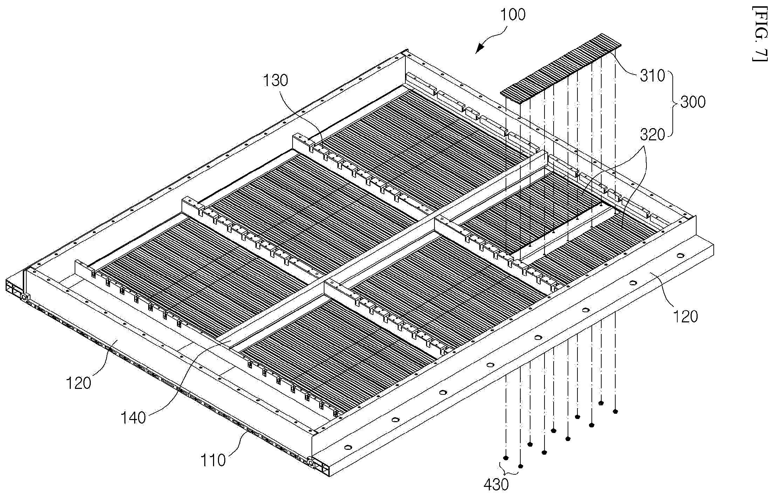

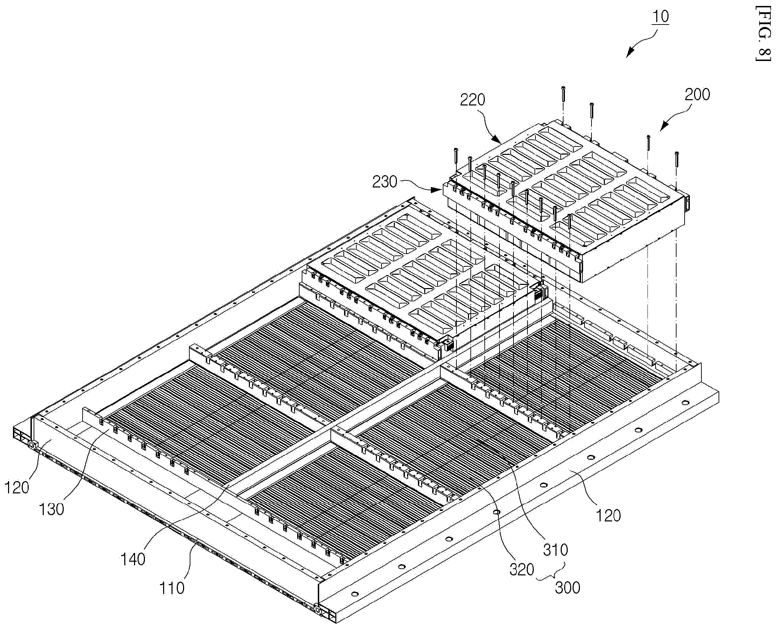

A second embodiment of the present disclosure describes the assembly process of the battery pack 10 described above. FIGS. 7 and 8 are drawings illustrating the assembly process of the battery pack 10 according to the present disclosure.

First, a pack case 100 is prepared for mounting the cell unit 200. The pack case 100 may include a base plate 110, side plates 120 coupled along a perimeter of the base plate 110 to form an accommodation space therein, and cross beams 130 and center beams 140 that transversely and longitudinally compartmentalize the accommodation space inside the base plate 110. Each accommodation space compartmentalized by the side plates 120, cross beam 130, and center beam 140 stores one cell unit 200.

For each accommodation space, a concave surface 114 is formed in the base plate 110, and through-holes 112 are formed in the concave surface 114. The concave surface 114 is shaped such that the main body 410 of the cell lower part panel 400 can be inserted, and the location and number of the through-holes 112 correspond to the bolts 420 provided in the cell lower part panel 400. The cell lower part panel 400, inserted into the concave surface 114 and with the bolts 420 fastened with nuts 430 on the bottom surface of the base plate 110, forms part of the base plate 110.

For the pack case 100 installed up to the cell lower part panel 400, the cell unit fixative 300 is applied. As described above, the cell unit fixative 300 includes two types, a structural adhesive 310 and a non-curable filler 320, with the respective application areas being referenced to the cell lower part panel 400. That is, the structural adhesive 310 is applied over the cell lower part panel 400, and the non-curable filler 320 is applied in other areas. It is important to note that the structural adhesive 310 is not applied outside of the cell lower part panel 400 to facilitate easy removal of the cell unit 200.

Next, as shown in FIG. 8, the cell units 200 are mounted one by one into each of the accommodation space where the cell unit fixative 300 has been applied by areas. The bottom surface of the cell unit 200 is fixed to the base plate 110 by adhesion of the cell unit fixative 300.

Meanwhile, the cell unit 200 includes a plurality of battery cells 210 and a busbar frame assembly 220 that mechanically and electrically couples the plurality of battery cells 210 at both transverse ends from which leads of the battery cells 210 protrude. The cell unit 200 also includes a side frame 230 that protects the battery cells 210 on both longitudinal sides.

To fix the cell units 200 in the lateral direction, the side frames 230 of the cell units 200 are bolted to the upper surface of the cross beams 130. In particular, as shown in FIG. 8, the side frame 230 of each cell unit 200 is fixed to the cross beam 130 to which it is assigned, and the side frames 230 of adjacent cell units 200 along the longitudinal direction do not overlap each other on the cross beam 130. This means that when mounting a plurality of cell units 200 in the pack case 100, it is not necessary to follow a prescribed assembly sequence to be able to mount them, and when removing one cell unit 200, it is not necessary to remove the adjacent cell units 200 first.

As such, the battery pack 10 of the present disclosure allows for the separation of only the faulty cell unit 200, as other cell units 200 do not interfere with the separation of any cell unit 200. Furthermore, in the first embodiment, as described with reference to FIG. 3, the curable adhesive layer 312 of the structural adhesive 310 that hinders the separation of the cell units 200 is limited in area to the cell lower part panel 400, which can be released from its fastening to the base plate 110, so that it also does not affect the separation of the cell units 200. Thus, the battery pack 10 of the present disclosure allows for easy removal of any of the cell units 200 regardless of the order of assembly, thereby facilitating replacement of a faulty battery cell 210.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present disclosure.

### [Description of Reference Numerals]

10: BATTERY PACK
100: PACK CASE
110: BASE PLATE
112: THROUGH-HOLE
114: CONCAVE SURFACE
116: RECESS
120: SIDE PLATE
130: CROSS BEAM
140; CENTER BEAM
150: COOLING PLATE
152: FLOW PATH
200: CELL UNIT
210: BATTERY CELL
220: BUSBAR FRAME ASSEMBLY
230: SIDE FRAME
240: BOLT
300: CELL UNIT FIXATIVE
310: STRUCTURAL ADHESIVE
312: CURABLE ADHESIVE LAYER
320: NON-CURABLE FILLER
322: NON-CURABLE ADHESIVE LAYER
400: CELL LOWER PART PANEL
410: MAIN BODY
420: BOLT
430: NUT

## Claims

1. A battery pack comprising:
a cell unit comprising a plurality of battery cells;
a base plate supporting a bottom surface of the cell unit;
a cell unit fixative interposed between the cell unit and the base plate, and comprising a structural adhesive applied to a portion of the bottom surface of the cell unit and a non-curable filler applied to a remaining portion of the bottom surface of the cell unit; and
a cell lower part panel interposed between the base plate and the cell unit fixative, the cell lower part panel being removably fastened to the base plate to which the cell unit is adhered and fixed by the structural adhesive.

2. The battery pack of claim 1, wherein the portion of the bottom surface of the cell unit corresponds to the cell lower part panel.

3. The battery pack of claim 1, wherein the cell lower part panel comprises a main body in which the structural adhesive is interposed, and a bolt extending from the main body, and
wherein the bolt is fixed with a nut through a through-hole formed in the base plate.

4. The battery pack of claim 3, wherein an upper surface of the base plate is provided with a concave surface comprising the through-hole, and
wherein the main body of the cell lower part panel is accommodated within the concave surface.

5. The battery pack of claim 4, wherein an upper surface of the main body accommodated in the concave surface and the upper surface of the base plate form a flat surface.

6. The battery pack of claim 3, wherein a bottom surface of the base plate is provided with a recess for accommodating the nut so that the nut does not protrude outwardly, thereby allowing a tool to access the nut.

7. The battery pack of claim 3, wherein a bottom surface of the base plate is coupled to a cooling plate, and
wherein bolts and nuts are located in areas where no flow paths are formed in the cooling plate.

8. The battery pack of claim 3, wherein the structural adhesive forms a curable adhesive layer, and
wherein the non-curable filler forms a non-curable adhesive layer.

9. The battery pack of claim 8, wherein the cell unit is released from a fixing state with respect to the base plate as the nut fastening of the bolt is released, and withdrawn out of the battery pack together with the cell lower part panel bonded by the structural adhesive.

10. The battery pack of claim 1, wherein the cell unit fixative has the non-curable filler disposed on either side of the structural adhesive.
